# EUROPÄISCHE PATENTANMELDUNG

(11) **EP 0 522 253 A1**
(43) Veröffentlichungstag der Anmeldung: **13.01.1993**
(21) Anmeldenummer: 92107298.9
(22) Anmeldetag: 29.04.1992
(51) Int. Cl.: B29C 67/18, B29C 67/14

(54) **Verfahren zum Herstellen eines Glasfasern aufweisenden Formteiles**

(30) Priorität: 02.07.1991 DE 4121866
(71) Anmelder: Pelz, Peter, W-8196 Eurasburg (DE)
(72) Erfinder: Pelz, Peter, W-8196 Eurasburg (DE)
(74) Vertreter: von Hellfeld, Axel, Dr. Dipl.-Phys.

(57) **Zusammenfassung**

Ein Verfahren zum Herstellen eines Kunststoff und stabilisierenden Glasfasern aufweisenden Formteils sieht vor, daß eine Seite der Thermoplast-Folie (16, 16') mit Glasfasern (14, 14') belegt wird, wobei die Glasfasern auf die Folie aufgeklebt werden. Die so mit Glasfasern einseitig beklebte Thermoplast-Folie (16, 16') wird auf einen Kern (12) aus Kunststoff, insbesondere Polyurethan, aufgebracht, wobei die Glasfasern dem Kern zugekehrt sind. Das derart gebildete Laminat wird in einer Formpresse geformt.

## Beschreibung

Die Erfindung betrifft ein Verfahren zum Herstellen eines Kunststoff und stabilisierende Glasfasern aufweisenden Formteils.

Solche flachen Formteile können beispielsweise einen Kern aus Kunststoff, wie Polyurethan, und eine Beschichtung aus Glasfasern auf zumindest einer Seite des Kerns aufweisen.

Solche Formteile sind im Stand der Technik bekannt. Sie bestehen aus einem Kern aus beispielsweise Polyurethan-Schaum, der sandwich-artig angeordnet ist zwischen zwei stabilisierenden Glasfaserschichten, die mittels eines Klebers mit dem Polyurethan-Schaum verbunden sind. Solche Formteile werden in Formpressen auf die gewünschte Form gebracht und dienen beispielsweise als Innenauskleidungen in Fahrzeugen, Flugzeugen etc.

Beim Stand der Technik besteht ein Problem darin, daß die äußeren Glasfaserschichten die Handhabung der Anordnung insofern erschweren, als eine Verletzungsgefahr für diejenigen Personen besteht, die mit den feinen Fasern in Berührung kommen. Auch abgelöste, fliegende Fasern stellen eine Gesundheitsgefahr dar.

Beim Stand der Technik ist es deshalb erforderlich, die Glasfasern mit einem Abdeckvlies, beispielsweise einem Polyethylen-Vlies, abzudecken. Hierdurch können sich keine Fasern vom Kern lösen und das Bedienungspersonal ist geschützt. Allerdings haben solche bekannte Abdeckvliese den Nachteile, daß die Handhabung des Systems relativ aufwendig ist und überdies besteht die Gefahr einer unzureichenden Trennung der Bauteile im Preßwerkzeug, insbesondere wenn der verwendete Kleber durch das Vlies durchdringt und das Element in der Presse in unerwünschter Weise hängen bleibt. Auch ist die Verwendung derartiger Abdeckvliese relativ teuer.

Im Stand der Technik sind auch verschiedene Verfahren zum Herstellen von Laminaten aus einem Kunststoffkern und einer Glasfaserschicht bekannt, wobei jedoch die Glasfasern mattenförmig, daß heißt gewebt, geflochten oder dergleichen sind. Bei solchen Systemen mit mattenförmigen Glasfasern treten die oben genannten Probleme nicht auf.

So beschreibt die DE-28 26 729 A1 ein Verfahren zum Herstellen von plattenförmigen Bauteilen aus Kunststoffmaterial, bei dem die Glasfasern in Mattenform, also gewebt, geflochten oder dergleichen gleichzeitig mit einer Deckfolie auf einen Kunststoffkern aufgebracht werden.

Die DE-19 63 563 A1 beschreibt ebenfalls den Einsatz von Glasfaser-Geweben in Mattenform, die mit thermoplactischen Schichten laminiert werden.

Die DE-20 38 297 A1 beschreibt einen gewebeverstärkten Bodenbelag, bei dem ebenfalls Glasfaser-Gewebe verwendet wird. Entsprechendes gilt für die DD 20 549.

Das DE-GM 74 01 488 beschreibt eine formstabile Dämmplatte aus Polyurethan-Hartschaum, bei dem ein Glasfaservlies verwendet wird, welches selbst beidseitig mit einer filzartigen Beschichtung aus Polyethylen oder dergleichen versehen ist.

Bei dem vorstehend genannten Stand der Technik werden Glasfaser-Gewebe oder -Matten verwendet, was aufwendig ist und einen gesonderten Herstellungsschritt erfordert.

Der Frfindung liegt die Aufgabe zugrunde, ein Verfahren zum Herstellen eines Kunststoff und stabilisierende Glasfasern aufweisenden Formteils zu schaffen, bei dem die Glasfasern in nicht gewebter oder geflochtener Form oder dergleichen aufgebracht werden können und wobei das Verfahren gleichwohl sicher handhabbar und kostengünstig ist.

Das erfindungsgemäße Verfahren zur Lösung dieser Aufgabe sieht vor:
- auf eine Seite einer Thermoplast-Folie werden die Glasfasern aufgerieselt und aufgeklebt,
- die so mit Glasfasern einseitig beklebte Thermoplast- Folie wird auf einen Kern aus Kunststoff, insbesondere Polyurethan, aufgebracht, wobei die Glasfasern dem Kern zugekehrt sind, und
- das derart gebildete Laminat wird in einer Formpresse geformt.

Gemäß einer bevorzugten Ausgestaltung des erfindungsgemäßen Verfahrens ist vorgesehen, daß zwei mit Glasfasern beklebte Thermoplast-Folien beidseitig auf den Kern aufgeklebt werden.

Die Aufklebung der Glasfasern auf die Thermoplast-Folie erfolgt entweder mittels eines Klebers oder, bevorzugt, durch thermisches Aufschmelzen.

Das derart gebildete Formteil kann in eine als solches bekannte Formpresse eingegeben werden, wobei die Temperatur der Presse unter der Schmelztemperatur des Thermoplasten liegt.

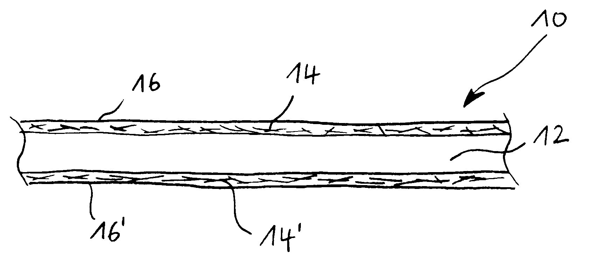

Nachfolgend wird anhand der Zeichnung ein Ausführungsbeispiel der Erfindung näher erläutert.

Die Figur zeigt schematisch einen Schnitt durch ein Formteil gemäß der Erfindung.

Das flache Formteil 10 weist einen Kern 12 auf, der beim dargestellten Ausführungsbeispiel aus Polyurethan-Schaum gebildet ist.

Zur Stabilisierung ist der Kern 12 aus PU-Schaum beidseitig verklebt mit Glasfasern 14, 14'.

Über den Glasfaser-Beschichtungen 14, 14' ist jeweils eine Folie 16 bzw. 16' aus einem Thermoplast aufgebracht, so daß die Glasfasern 14, 14' vollständig abgedeckt sind.

Zur Herstellung der vorstehend beschriebenen Laminat-Formteils wird folgendermaßen verfahren:
Zunächst wird auf die relativ dünne Thermoplast-Folie 16 (bzw. 16') eine Glasfaserschicht auf einer Seite der Folie aufgebracht, insbesondere durch thermisches Aufkleben, wobei die Folie auf eine Temperatur gebracht wird, bei der die Glasfasern ohne Kleber anhaften.

Wesentlich ist, daß die Glasfasern nicht in gewebter oder geflochtener Form vorbereitet werden müssen, sondern auf die entsprechend vorbereitete Folie aufgerieselt (aufgestreut) werden. Die Folie wird also derart präpariert, daß die aufgerieselten Glasfasern auf ihr kleben bleiben. Dabei kann gleichzeitig ein Gasstrom verwendet werden, um die Glasfasern auf die Folie aufzubringen und die Folie zu erhitzen, wobei der Gasstrom eine entsprechende Temperatur aufweist, die zum hinreichenden Anschmelzen der Folie führt.

Der Ausdruck "Rieseln" soll hier auch so verstanden werden können, daß die Glasfasern vor ihrer Aufbringung auf die Folie in einen Zustand gebracht werden, in dem sie aneinander haften und so einen relativ lockeren Verbund bilden. Die Folie wird also mit nicht gewebten oder geflochtenen Glasfasern belegt.

Sodann wird die derart auf einer Seite mit Glasfasern beschichtete Folie auf den plattenförmigen Kern 12 aus PU-Schaum aufgelegt, wobei auf der entsprechenden Oberfläche des Kernes 12 zuvor ein Klebemittel aufgebracht wurde, so daß die Glasfaserschicht mit der an ihr befestigten Thermoplast-Folie am Kern 12 anhaftet. Vorzugsweise wird ein duroplastischer Polyurethan-Kleber verwendet.

Diese Aufbringung einer einseitig mit Glasfasern beschichteten Thermoplast-Folie erfolgt auf beiden Seiten des Kerns 12, so daß eine stabile Sandwich-Struktur entsteht.

Das derart vorbereitete Formteil wird in eine als solches bekannte Formpresse eingegeben und dort geformt, wobei die Arbeitstemperatur der Presse unter der Schmelztemperatur der Thermoplast-Folie liegt, z.B. kann bei einer Schmelztemperatur des Thermoplasten von 130°C in der Presse eine Temperatur von 80°C vorgesehen werden.

## Patentansprüche

1. Verfahren zum Herstellen eines Kunststoff und stabilisierende Glasfasern aufweisenden Formteils (10) mit zumindest folgenden Schritten:
- auf eine Seite einer Thermoplast-Folie (16, 16') werden die Glasfasern (14, 14') aufgerieselt und aufgeklebt,
- die so mit Glasfasern (14) einseitig beklebte Thermoplast-Folie (16, 16') wird auf einen Kern (12) aus Kunststoff, insbesondere Polyurethan, aufgebracht, wobei die Glasfasern (14, 14') dem Kern (12) zugekehrt sind, und
- das derart gebildete Laminat (12, 14, 14', 16, 16') wird in einer Formpresse geformt.

2. Verfahren nach Anspruch 1,
dadurch **gekennzeichnet,** daß zwei mit Glasfasern (14, 14') beklebte Thermoplast-Folien (16, 16') beidseitig auf den Kern (12) aufgeklebt werden.
